# EUROPÄISCHE PATENTSCHRIFT

(11) **EP 1 214 212 B1**
(45) Veröffentlichungstag und Bekanntmachung des Hinweises auf die Patenterteilung: **09.08.2006**
(21) Anmeldenummer: 00965781.8
(22) Anmeldetag: 23.08.2000
(51) Int. Cl.: B60H 1/00, B60R 16/02

(54) **KRAFTFAHRZEUG-INNENRAUMKLIMATISIERUNG**
AIR CONDITIONING SYSTEM FOR THE PASSENGER COMPARTMENT OF A MOTOR VEHICLE
SYSTEME DE CLIMATISATION DE L'HABITACLE D'UNE AUTOMOBILE

(30) Priorität: 01.09.1999 DE 19941487
(43) Veröffentlichungstag der Anmeldung: 19.06.2002
(73) Patentinhaber: ROBERT BOSCH GMBH, 70442 Stuttgart (DE)
(72) Erfinder: HERSEL, Walter, D-71229 Leonberg (DE); MUNZ, Juergen, D-70794 Filderstadt (DE); EISENHARDT, Harald, D-71277 Rutesheim (DE); WEIBLE, Reinhold, D-70437 Stuttgart (DE); FALLIANO, Rolf, D-73653 Rudersberg (DE)
(86) Internationale Anmeldenummer: PCT/DE2000/002878
(87) Internationale Veröffentlichungsnummer: WO 2001/015920

(56) Entgegenhaltungen:
- DE-A- 19 545 566
- FR-A- 2 561 179
- FR-A- 2 694 848
- US-A- 5 796 332

## Beschreibung

### Stand der Technik

Die Erfindung betrifft eine Kraftfahrzeug-Innenraumklimatisierung mit einem Gebläseregler, Heizungssteuergerät oder bürstenlosen Gebläsemotor sowie mit Funktionskomponenten, wie Bedienungselemente, Fühler, Taktventile und Verstellantriebe, die über Verbindungsleitungen untereinander und mit der Fahrzeugbatterie verbunden sind und auf denen die zum Betrieb des Gebläsereglers, Heizungssteuergerätes oder bürstenlosen Gebläsemotors erforderlichen Informationen übertragen werden.

Bei der Kraftfahrzeug-Innenraumklimatisierung werden zur Regelung der Gebläseleistung Gebläseregler oder bürstenlose Elektromotoren eingesetzt. Dabei kann zur Steuerung/Regelung auch ein Mikrorechner verwendet werden. Um eine verbesserte Aufheizung nach dem Kaltstart zu erreichen, kann auch eine Zusatzheizung vorgesehen sein. Für diese Heizungen werden spezielle Heizungssteuergeräte verwendet, die ebenfalls einen Mikrorechner aufweisen können.

Die eingesetzten Verstellantriebe können von einem Steuergerät mit Mikrorechner gesteuert werden.

Eine Kraftfahrzeug-Innenraumklimatisierung bekannter Art ist durch eine Vielzahl von Varianten gekennzeichnet. So ist der Einsatz von folgenden Komponenten bekannt:
a) Gebläseregler/Heizungssteuergerät mit Strom- oder Spannungseingang,
b) Gebläseregler/Heizungssteuergerät mit PWM-Eingang,
c) diagnosefähige Gebläseregler/Heizungssteuergeräte,
d) Gebläseregler/Heizungssteuergerät mit Diagnoseschnittstelle,
e) bürstenlose Elektromotoren,
f) Steuergeräte für Verstellantriebe,
g) busfähige Verstellantriebe oder Ventilsteuerungen.

In jedem Fall benötigen Kraftfahrzeug-Innenraumklimatisierungen mit diesen Funktionskomponenten eine aufwendige, im Fahrzeug zu führende Verkabelung mit einer Vielzahl von über Steckverbindungen zu führenden Adern.

Die FR-A-2 694 848 zeigt eine auch für eine Klimaanlage eines Kraftfahrzeug verwendbare Vorrichtung zur zentralen Steuerung von im Kraftfahrzeug verteilter Zubehöreinheiten mittels einer zentralen Steuereinheit, wobei die Steuereinheit und die Zubehöreinheiten über ein Bussystem miteinander verbunden sind. Die Zubehöreinheiten weisen jeweils einen Codierer/Decodierer zur Ansteuerung von in den Zubehöreinheiten integrierten Relais auf, mit denen unterschiedliche Aktuatoren der jeweiligen Zubehöreinheiten aktiviert oder deaktiviert werden können.

Weiterhin ist aus der FR-A- 2 561 179 eine Klimaanlage für Kraftfahrzeuge mit einer Regeleinheit zum Regeln des Innenraumklimas nach fest vorgegebenen Regelkennlinien in Abhängigkeit von den momentan herrschenden Umweltparametern bekannt. Die Regeleinheit weist einen Mikroprozessor auf, der einerseits mit Sensoren und andererseits mit Stell- oder Betätigungsgliedern verbunden ist. Weiterhin ist der Mikroprozessor der Regeleinheit mit einem Bedienungspanel verbunden, das zur Erzielung eines an individuelle Behaglichkeitsvorstellungen des Benutzers angepassten Klimakomforts unter anderem Korrekturtasten zum manuellen Eingeben von Korrekturwerten für einzelne, das Innenraumklima bestimmende Klimaparameter trägt.

Es ist Aufgabe der Erfindung, eine Kraftfahrzeug-Innenraumklimatisierung der eingangs erwähnten Art zu schaffen, die mit einem Minimum von Verkabelungsaufwand in das Fahrzeug einzubauen ist.

Diese Aufgabe wird nach der Erfindung dadurch gelöst, dass der Gebläseregler, das Heizungssteuergerät oder der bürstenlose Gebläsemotor und die Funktionskomponenten zu einer vorverdrahteten Klimaeinheit zusammengefaßt sind, der die Versorgungsspannung der Fahrzeugbatterie zugeführt ist, dass der Gebläseregler, das Heizungssteuergerät oder der bürstenlose Gebläsemotor mit einem Mikrorechner busfähig ausgelegt sind, der über eine Busschnittstelle (z.B. 2-Drahtbus B) mit einem von der Versorgungsspannung gespeisten Klimabediengerät in Verbindung steht und dass die für den Betrieb der Klimaanlage erforderlichen Informationen über die Busschnittstelle (z.B. 2-Drahtbus B) zwischen Klimabediengerät und Mikrorechner als Teil eines Busprotokolls übertragbar sind.

Durch die Integration der Funktionskomponenten in die Klimaeinheit und Ausnützung des Gebläsereglers, des Heizungssteuergerätes oder des bürstenlosen Gebläsemotors mit dem Mikrorechner in Verbindung mit dem Bussystem wird nicht nur der Verkabelungsaufwand auf ein Minimum mit der Busschnittstelle und der Spannungsversorgung reduziert, es werden gleichzeitig auch für die Prüfung der Klimaeinheit entscheidende Vorteile erreicht. Die Klimaeinheit kann komplett vorgefertigt und durch die Busschnittstelle einfach geprüft werden. Dabei können die Verstellantriebe geeicht und die Fühler ohne zusätzlichen Steckaufwand überprüft werden. Der Anschluß der Klimaeinheit erfordert nur einen einzigen Steckvorgang. Die vorgeprüfte Klimaeinheit braucht beim Kraftfahrzeughersteller nach dem Einbau nicht mehr vollständig überprüft zu werden. Der Montage- und Prüfaufwand ist dadurch stark vermindert. Im Klimabediengerät kann der Software- und Hardware-Aufwand verringert werden, da hardwarespezifische Anforderungen in eine Komponente der Klimaeinheit verlagert werden.

Nach einer Weiterbildung ist vorgesehen, dass der Mikrorechner des Gebläsereglers, des Heizungssteuergerätes oder des bürstenlosen Gebläsemotors Diagnosedaten als Teil des Busprotokolls an das Klimabediengerät zurückmeldet.

Innerhalb des vorverdrahteten Klimagerätes kann für den Informationsaustausch darüber hinaus vorgesehen werden, dass die in der Klimaeinheit von nicht busfähigen Funktionskomponenten anstehenden Informationen vom Mikrorechner des Gebläsereglers, des Heizungssteuergerätes oder des bürstenlosen Gebläsemotors verarbeitet und als Teil des Busprotokolls zur Verfügung gestellt werden.

Eine weitere Verbesserung läßt sich dadurch erreichen, dass zur Reduzierung der Ruhestromaufnahme busfähige Funktionskomponenten in der Klimaeinheit bedarfsabhänging mit der Versorgungsspannung verbindbar sind.

Für das Bussystem ist eine Ausgestaltung von Vorteil, die dadurch gekennzeichnet ist, dass ein normiertes Busprotokoll die Informationen für die Serienausstattung der Funktionskomponenten der Klimaeinheit umfaßt.

Der Anschluß der Klimaeinheit erfolgt nach einer Ausgestaltung einfach dadurch, dass die Klimaeinheit über eine dreiadrige Steckverbindung anschaltbar ist.

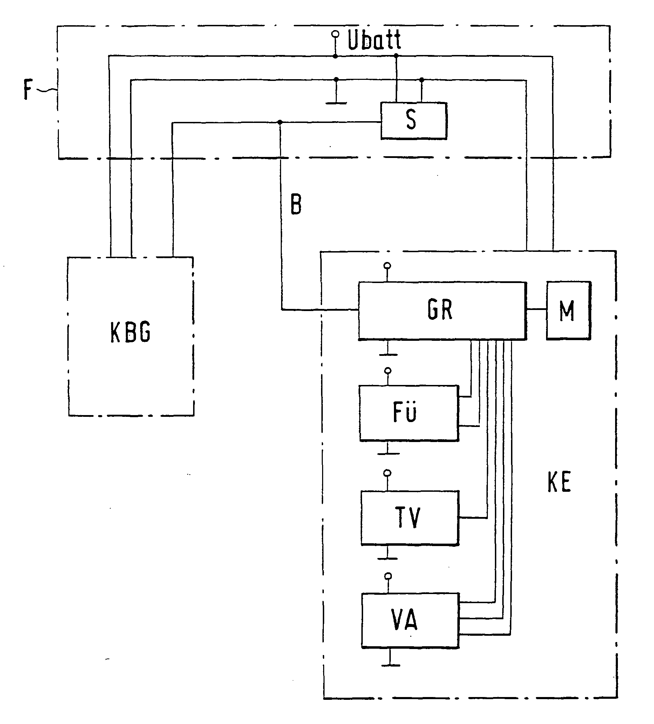

Die Erfindung wird anhand eines in der Zeichnung als Blockschaltbild dargestellten Ausführungsbeispiels näher erläutert.

In dem Blockschaltbild sind mit den drei Blöcken die Basiseinheiten der erfindungsmäßigen Kraftfahrzeug-Innenraumklimatisierung gekennzeichnet, die auf einfache Weise mit einem Minimum an Verkabelungsaufwand untereinander verbunden sind. Im Fahrzeug F ist mit Ubatt die Versorgungsspannung der Fahrzeugbatterie und mit S ein Sensor an einer Busleitung B gekennzeichnet, die von einem Klimabediengerät KBG eines Bussystems zu einer Klimaeinheit KE führt. Die Klimaeinheit KE ist vollständig vorgefertigt, vorverdrahtet und vorgeprüft und beinhaltet einen Gebläseregeler GR mit Mikrorechner, ein Heizungssteuergerät mit Mikrorechner, oder einen bürstenlosen Gebläsemotor mit einem Mikrorechner, die jeweils beide busfähig ausgebildet und mit dem 2-Drahtbus B als Busschnittstelle verbunden sind.

In der Klimaeinheit KE sind sämtliche Funktionskomponenten der Klimaanlage untergebracht, die selbst busfähig ausgebildet sein können, wie mit Verstellantrieben VA angedeutet ist.

Auch nicht busfähige Funktionskomponenten, wie Fühler Fü und Taktventile TV sind in der Klimaeinheit KE untergebracht, wobei deren Informationen von dem Mikrorechner des Gebläsereglers GR, des Heizungssteuergerätes oder des bürstenlosen Gebläsemotors in Teile des Busprotokolls umgewandelt werden. Zu dem Klimabediengerät KBG können Diagnosedaten zurückübertragen werden. Bei busfähigen Funktionskomponenten kann zur Verminderung des Ruhestromes die Stromversorgung auch bedarfsabhängig in der Klimaeinheit KE gesteuert werden.

Die Klimaeinheit KE kann über eine einfache dreiadrige Steckverbindung im Kraftfahrzeug angeschlossen werden. Die Verkabelung für die gesamte Innenraumklimatisierung ist besonders einfach, wie das Blockschaltbild erkennen läßt.

Dabei ist der 2-Dratbus B nicht direkt zur Klimaeinheit KE geführt, sondern über die Fahrzeugverkabelung noch mit einem Sensor S verbunden, der mit in das Bussystem einbezogen werden kann.

Es hat sich als besonders vorteilhaft erwiesen, wenn für eine Serienausstattung der Klimaanlage ein normiertes Bussystem zum Einsatz kommen kann.

Der Vorteil der Kraftfahrzeug-Innenklimatisierung mit der Aufteilung und Steuerung/Regelung nach der Erfindung bringt neben dem minimalen Verkabelungsaufwand im Fahrzeug F weitere entscheidende Vorteile, die auf der Vorfertigung und Vorprüfung der Klimaeinheit KE basieren und so den Einbau und die Prüfung der Klimaanlage im Fahrzeug vereinfachen.

## Patentansprüche

1. Kraftfahrzeug-Innenraumklimatisierung mit einem Gebläseregler (GR), Heizungssteuergerät oder bürstenlosen Gebläsemotor sowie mit Funktionskomponenten, wie Bedienungselemente, Fühler (Fü), Taktventile (TV) und Verstellantriebe (VA), die über Verbindungsleitungen untereinander und mit der Fahrzeugbatterie verbunden sind und auf denen die zum Betrieb des Gebläsereglers (GR), Heizungssteuergerätes oder bürstenlosen Gebläsemotors erforderlichen Informationen übertragen werden,
**dadurch gekennzeichnet, dass** der Gebläseregler (GR), das Heizungssteuergerät oder der bürstenlose Gebläsemotor mit den Funktionskomponenten (Fü, TV, VA) zu einer vorverdrahteten Klimaeinheit (KE) zusammengefasst sind, der die Versorgungsspannung (Ubatt) der Fahrzeugbatterie zugeführt ist, wobei diese Klimaeinheit mit einem Mikrorechner busfähig ausgelegt ist, der über eine Busschnittstelle (z.B. 2-Drahtbus) mit einem von der Versorgungsspannung (Ubatt) gespeisten Klimabediengerät (KBG) in Verbindung steht und dass die für den Betrieb der Klimaanlage erforderlichen Informationen über die Busschnittstelle (2-Drahtbus B) zwischen Klimabediengerät (KBG) und Mikrorechner als Teil eines Busprotokolls übertragbar sind.

2. Kraftfahrzeug-Innenraumklimatisierung nach Anspruch 1,
**dadurch gekennzeichnet,**
**dass** der Mikrorechner des Gebläsereglers (GR), des Heizungssteuergerätes oder des bürstenlosen Gebläsemotors Diagnosedaten als Teil des Busprotokolls an das Klimabediengerät (KBG) zurückmeldet.

3. Kraftfahrzeug-Innenraumklimatisierung nach Anspruch 1 oder 2,
**dadurch gekennzeichnet,**
**dass** die in der Klimaeinheit (KE) von nicht busfähigen Funktionskomponenten (Fü, TV) anstehenden Informationen vom Mikrorechner des Gebläsereglers (GR), des Heizungssteuergerätes oder des bürstenlosen Gebläsemotors verarbeitet und als Teil des Busprotokolls zur Verfügung gestellt werden.

4. Kraftfahrzeug-Innenraumklimatisierung nach einem der Ansprüche 1 bis 3,
**dadurch gekennzeichnet,**
**dass** zur Reduzierung der Ruhestromaufnahme busfähige Funktionskomponenten (VA) in der Klimaeinheit (KE) bedarfsabhänging mit der Versorgungsspannung (Ubatt) verbindbar sind.

5. Kraftfahrzeug-Innenraumklimatisierung nach einem der Ansprüche 1 bis 4,
**dadurch gekennzeichnet,**
**dass** ein normiertes Busprotokoll die Informationen für die Serienausstattung der Funktionskomponenten der Klimaeinheit (KE) umfaßt.

6. Kraftfahrzeug-Innenraumklimatisierung nach einem der Ansprüche 1 bis 5,
**dadurch gekennzeichnet,**
**dass** die Klimaeinheit (KE) über eine dreiadrige Steckverbindung anschaltbar ist.

## Claims

1. Air-conditioning arrangement for the passenger compartment of a motor vehicle, having a blower controller (GR), heater control device or brushless blower motor and having functional components, such as operator control elements, sensors (Fü), cyclical valves (TV) and adjusting drives (VA) which are connected to one another and to the vehicle battery via connection lines and to which the information required to operate the blower controller (GR), heater control device or brushless blower motor is transmitted,
**characterized in that** the blower controller (GR), the heater control device or the brushless blower motor are combined with the functional components (Fü, TV, VA) to form a prewired air-conditioning unit (KE) which is supplied with the supply voltage (Ubatt) of the vehicle battery, this air-conditioning unit being designed, such that it can be bussed to a microcomputer which is connected to an air-conditioning operator control device (KBG), which is supplied with the supply voltage (Ubatt), by means of a bus interface (for example 2-wire bus), and **in that** the information required to operate the air-conditioning system can be transmitted between the air-conditioning operator control device (KBG) and the microcomputer by means of the bus interface (2-wire bus B) as part of a bus protocol.

2. Air-conditioning arrangement for the passenger compartment of a motor vehicle according to Claim 1,
**characterized**
**in that** the microcomputer of the blower controller (GR), the heater control device or the brushless blower motor sends diagnosis data back to the air-conditioning operator control device (KBG) as part of the bus protocol.

3. Air-conditioning arrangement for the passenger compartment of a motor vehicle according to Claim 1 or 2,
**characterized**
**in that** the information provided in the air-conditioning unit (KE) by the functional components (Fü, TV), which are not bussable, is processed by the microcomputer of the blower controller (GR), the heater control device or the brushless blower motor and made available as part of the bus protocol.

4. Air-conditioning arrangement for the passenger compartment of a motor vehicle according to one of Claims 1 to 3,
**characterized**
**in that**, in order to reduce quiescent current consumption, bussable functional components (VA) in the air-conditioning unit (KE) can be connected to the supply voltage (Ubatt) as required.

5. Air-conditioning arrangement for the passenger compartment of a motor vehicle according to one of Claims 1 to 4,
**characterized**
**in that** a standardized bus protocol comprises the information for the standard equipment of the functional components of the air-conditioning unit (KE).

6. Air-conditioning arrangement for the passenger compartment of a motor vehicle according to one of Claims 1 to 5,
**characterized**
**in that**
the air-conditioning unit (KE) can be connected by means of a three-wire plug connection.

## Revendications

1. Système de climatisation de l'habitacle d'un véhicule automobile avec un régulateur de ventilation (GR), un appareil de commande de chauffage ou un moteur du ventilateur sans balais ainsi que des composants fonctionnels, comme des éléments de commande, des capteurs (Fü), des soupapes de synchronisation (TV) et des entraînements de réglage (VA), reliés les uns aux autres et à la batterie du véhicule par des lignes de branchement et recevant les informations nécessaires pour le fonctionnement du régulateur de ventilation (GR), de l'appareil de commande de chauffage ou du moteur du ventilateur sans balais,
**caractérisé en ce que**
le régulateur de ventilation (GR), l'appareil de commande de chauffage ou le moteur du ventilateur sans balais sont rassemblés avec les composants fonctionnels (Fü, TV, VA) en une unité de climatisation précâblée (KE), à laquelle la tension d'alimentation (Ubatt) de la batterie du véhicule est appliquée, cette unité de climatisation étant conçue pour avoir les fonctionnalités d'un bus, avec un micro-ordinateur en liaison par une interface de bus (par exemple un bus à 2 fils) avec un appareil de commande de climatisation (KBG) alimenté par la tension d'alimentation (Ubatt), et les informations nécessaires pour le fonctionnement de l'installation de climatisation peuvent être transmises par l'interface de bus (bus à 2 fils B) entre l'appareil de commande de climatisation (KBG) et le micro-ordinateur sous la forme d'une partie d'un protocole de bus.

2. Système de climatisation de l'habitacle d'un véhicule automobile selon la revendication 1,
**caractérisé en ce que**
le micro-ordinateur du régulateur de ventilation (GR), de l'appareil de commande de chauffage ou du moteur du ventilateur sans balais renvoie des données de diagnostic sous la forme d'une partie du protocole de bus à l'appareil de commande de climatisation (KBG).

3. Système de climatisation de l'habitacle d'un véhicule automobile selon la revendication 1 ou 2,
**caractérisé en ce que**
les informations présentes dans l'unité de climatisation (KE) par des composants fonctionnels (Fü, TV) n'ayant pas les fonctionnalités d'un bus sont traitées par le micro-ordinateur du régulateur de ventilation (GR), de l'appareil de commande de chauffage ou du moteur du ventilateur sans balais et sont mises à disposition sous la forme d'une partie du protocole de bus.

4. Système de climatisation de l'habitacle d'un véhicule automobile selon l'une quelconque des revendications 1 à 3,
**caractérisé en ce que**
pour réduire la consommation de courant au repos, on peut raccorder les composants fonctionnels (VA) ayant les fonctionnalités d'un bus dans l'unité de climatisation (KE) à la tension d'alimentation (Ubatt) en fonction des besoins.

5. Système de climatisation de l'habitacle d'un véhicule automobile selon l'une quelconque des revendications 1 à 4,
**caractérisé en ce qu'**
un protocole de bus normalisé comprend les informations pour l'équipement en série des composants fonctionnels de l'unité de climatisation (KE).

6. Système de climatisation de l'habitacle d'un véhicule automobile selon l'une quelconque des revendications 1 à 5,
**caractérisé en ce que**
l'unité de climatisation (KE) est branchée par une fiche de connexion à trois fils.
